# EUROPÄISCHE PATENTSCHRIFT

(11) **EP 4 305 736 B1**
(45) Veröffentlichungstag und Bekanntmachung des Hinweises auf die Patenterteilung: **27.11.2024**
(21) Anmeldenummer: 22712825.3
(22) Anmeldetag: 25.02.2022
(51) Int. Cl.: H02K 1/276

(54) **ROTOR EINER ELEKTRISCHEN MASCHINE**
ROTOR OF AN ELECTRIC MACHINE
ROTOR DE MACHINE ÉLECTRIQUE

(30) Priorität: 11.03.2021 DE 102021202360
(43) Veröffentlichungstag der Anmeldung: 17.01.2024
(73) Patentinhaber: Robert Bosch GmbH, 70442 Stuttgart (DE)
(72) Erfinder: FRIDRICH, Juergen, 70565 Stuttgart (DE); KLIS, Daniel, 70825 Korntal-Muenchingen (DE); ALEXANDER, Marcus, 71640 Ludwigsburg (DE); SICHAU, Adrian Heinrich, 71088 Holzgerlingen (DE); THEISINGER, Peter, 71706 Markgroeningen (DE); REUTLINGER, Kurt, 70174 Stuttgart (DE); ALBUNNI, Mohammad Nassar, 71069 Sindelfingen (DE)
(86) Internationale Anmeldenummer: PCT/EP2022/054816
(87) Internationale Veröffentlichungsnummer: WO 2022/189170

(56) Entgegenhaltungen:
- WO-A1-2019/179863
- DE-A1- 102010 002 786
- DE-A1- 102018 215 864
- US-A1- 2010 237 735

## Beschreibung

### Stand der Technik

Die Erfindung geht aus von einem Rotor einer elektrischen Maschine nach der Gattung des Hauptanspruchs.

Es ist schon ein Rotor einer elektrischen Maschine aus der DE102010002786 A1 bekannt, mit einem um eine Rotorachse rotierbaren Rotorkörper, der bezogen auf einen Querschnitt mehrere Rotorpole mit jeweils einer Polmittelachse aufweist, wobei einer der Rotorpole eine zweilagige Magnetanordnung umfassend mehrere Magnete, insbesondere Permanentmagnete, aufweist, wobei die Magnetanordnung in radialer Richtung bezüglich der Rotorachse gesehen jeweils eine innere Lage von vier Magneten und eine äußere Lage von zwei Magneten umfasst, wobei die innere Lage einen nach radial außen geöffneten Bogen bildet, wobei die äußere Lage derart V-förmig ausgebildet ist, dass der Abstand zwischen den Magneten der äußeren Lage nach radial außen hin zunimmt, wobei die bezüglich der Polmittelachse äußeren Magnete der inneren Lage und die Magnete der äußeren Lage jeweils einen Neigungswinkel zur Polmittelachse aufweisen, der zwischen der Polmittelachse und einer Neigungsachse des jeweiligen Magneten eingeschlossen ist.

### Vorteile der Erfindung

Der erfindungsgemäße Rotor mit den kennzeichnenden Merkmalen des Hauptanspruchs hat demgegenüber den Vorteil, dass eine mit dem erfindungsgemäßen Rotor ausgestattete elektrische Maschine ein höheres maximales Drehmoment erzeugen kann sowie eine geringere Drehmomentenwelligkeit und eine gute Feldschwächbarkeit aufweist. Dies wird erfindungsgemäß erreicht, indem die Magnete der radial äußeren Lage derart angeordnet sind, dass ein Schnittpunkt der Neigungsachse der Magnete der radial äußeren Lage mit der Polmittelachse radial innerhalb der radial inneren Lage liegt, und indem der Neigungswinkel der Magnete der radial äußeren Lage kleiner ausgebildet ist als der Neigungswinkel der äußeren Magnete der radial inneren Lage.

Durch die in den Unteransprüchen aufgeführten Maßnahmen sind vorteilhafte Weiterbildungen und Verbesserungen des im Hauptanspruch angegebenen Rotors möglich.

Nach einem vorteilhaften ersten Ausführungsbeispiel kann, bezogen auf einen Querschnitt des Rotors in einer Ebene einer der Blechlamellen, zwischen den äußeren Magneten der inneren Lage ein einziger innerer Magnet vorgesehen sein, der insbesondere symmetrisch zur Polmittelachse angeordnet ist. Auf diese Weise wird ein Rotor mit geringen Herstellungskosten erreicht. So werden gegenüber dem zweiten Ausführungsbeispiel weniger Magnete benötigt. Ein einziger innerer Magnet ist zudem kostengünstiger als zwei innere Magnete nach dem zweiten Ausführungsbeispiel.

Nach einem vorteilhaften zweiten Ausführungsbeispiel kann, bezogen auf einen Querschnitt des Rotors in einer Ebene einer der Blechlamellen, zwischen den äußeren Magneten der inneren Lage zwei innere Magnete vorgesehen sein, die insbesondere symmetrisch zur Polmittelachse angeordnet sind. Durch diese Ausführung kann zwischen den beiden inneren Magneten ein zentraler Steg ausgebildet werden, der ein bezüglich der Rotorachse radial inneres Polsegment mit einem radial äußeren Polsegment des Rotorpols verbindet, wobei die Magnetanordnung zwischen dem äu-ßeren Polsegment und dem inneren Polsegment angeordnet ist. Auf diese Weise wird eine besonders hohe mechanische Festigkeit des Rotors erreicht.

Besonders vorteilhaft ist, wenn nach dem zweiten Ausführungsbeispiel die inneren Magnete der inneren Lage einen Neigungswinkel zur Polmittelachse aufweisen, der kleiner als 90 Grad ist. Auf diese Weise schmiegen sich die inneren Magnete an eine Bogenform der inneren Lage der Magnetanordnung an. Weiterhin ist die Lage der inneren Magnete besser an den Verlauf der magnetischen Feldlinien angepasst.

Weiterhin vorteilhaft ist, wenn die Höhe des inneren Magneten nach dem ersten Ausführungsbeispiel bzw. die Höhe der inneren Magnete nach dem zweiten Ausführungsbeispiel größer ist als die Höhe der übrigen Magnete der jeweiligen Magnetanordnung. Auf diese Weise erreicht man eine gute Entmagnetisierungsfestigkeit der inneren Magnete sowie eine höhere Durchflutung und einen höheren magnetischen Fluss durch die inneren Magnete.

Desweiteren vorteilhaft ist, wenn der innere Magnet bzw. die inneren Magnete gegenüber den übrigen Magneten der jeweiligen Magnetanordnung aus einem Material mit geringerer magnetischer Koerzitivfeldstärke und/oder mit höherer magnetischer Remanenz hergestellt ist. Durch eine höhere Remanenz des bzw. der inneren Magnete kann der Magnetfluss weiter erhöht werden, wodurch das Moment der elektrischen Maschine gesteigert wird. Bei Seltenerdmagneten kann durch teure Zuschlagsstoffe (beispielsweise Dysprosium) die Koerzitivfeldstärke zu Lasten der Remanenz erhöht werden. Die inneren Magnete sind jedoch weniger gefährdet, durch Gegenfelder entmagnetisiert zu werden. Daher kann für die inneren Magnete ein Magnetmaterial mit geringerem Dysprosiumgehalt verwendet werden.

Sehr vorteilhaft ist es, wenn die bezüglich der Polmittelachse äußeren Magnete der inneren Lage und die Magnete der äußeren Lage bezüglich der Abmessungen und/oder des Materials identisch ausgebildet sind. Auf diese Weise gibt es im Rotor zwei unterschiedliche Arten von Magneten, die aufgrund unterschiedlicher Abmessungen bei der Montage leicht zu unterscheiden sind.

Auch vorteilhaft ist, wenn die bezüglich der Polmittelachse äußeren Magnete der inneren Lage und die Magnete der äußeren Lage symmetrisch zur Polmittelachse angeordnet sind. Auf diese Weise wird erreicht, dass die Rotorpole symmetrisch sind und das Betriebsverhalten der elektrischen Maschine in beiden Dreh- und Momentenrichtungen identisch ist.

Desweiteren vorteilhaft ist, wenn die Magnete der inneren Lage in separaten Taschen des Rotorkörpers und/oder die Magnete der äußeren Lage in separaten Taschen des Rotorkörpers vorgesehen sind. Auf diese Weise wird eine höhere mechanische Festigkeit des Rotorkörpers erreicht.

Darüber hinaus vorteilhaft ist, wenn radial außerhalb der äußeren Lage zwei schlitzförmige Aussparungen als Flussbarriere angeordnet sind, die einen derartigen Neigungswinkel zur Polmittelachse aufweisen, dass der Abstand zwischen den Aussparungen nach radial innen hin zunimmt, und die insbesondere symmetrisch zur Polmittelachse liegen.

### Zeichnung

Zwei Ausführungsbeispiele der Erfindung sind in der Zeichnung vereinfacht dargestellt und in der nachfolgenden Beschreibung näher erläutert.
- Fig.1: zeigt eine Ansicht eines erfindungsgemäßen Rotorpols eines Rotors nach einem ersten Ausführungsbeispiel und
- Fig.2: eine Ansicht eines erfindungsgemäßen Rotorpols eines Rotors nach einem zweiten Ausführungsbeispiel.

### Beschreibung der Ausführungsbeispiele

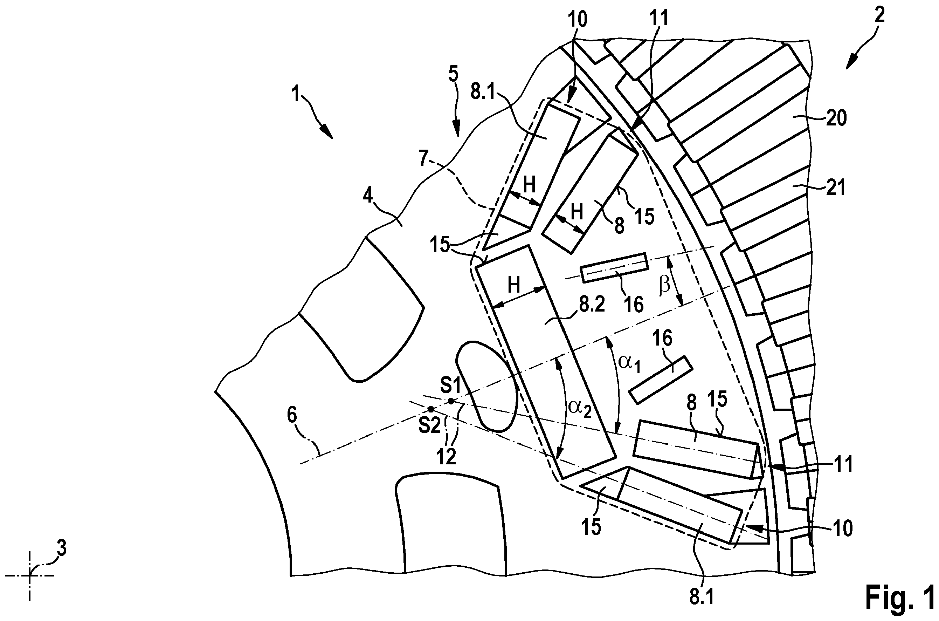

Fig.1 zeigt eine Ansicht eines erfindungsgemäßen Rotorpols eines Rotors nach einem ersten Ausführungsbeispiel.

Der Rotor 1 einer elektrischen Maschine 2 umfasst einen um eine Rotorachse 3 rotierbaren Rotorkörper 4, der bezogen auf einen Querschnitt des Rotors 1 mehrere Rotorpole 5 mit jeweils einer Polmittelachse 6 aufweist. Von den mehreren Rotorpolen 5 des Rotors 1 ist in der Fig.1 lediglich ein einzelner Rotorpol 5 gezeigt. Der Rotorkörper 4 ist beispielsweise als sogenanntes Blechpaket ausgeführt, das aus einem Stapel von Blechlamellen gebildet ist. Mehrere der Rotorpole 5, beispielsweise alle Rotorpole 5 des Rotors 1, haben jeweils eine zweilagige Magnetanordnung 7, die mehrere Magnete 8 umfasst. Die Magnete 8 sind als Permanentmagnete ausgeführt. Die Magnetanordnung 7 weist in radialer Richtung bezüglich der Rotorachse 3 gesehen jeweils eine innere Lage 10 von mindestens drei Magneten 8 und eine äußere Lage 11 von zwei Magneten 8 auf.

Die innere Lage 10 bildet einen nach radial außen zu einem Außenumfang 1.1 des Rotors 1 hin geöffneten Bogen. Die äußere Lage 11 ist derart ausgebildet, dass der Abstand zwischen den Magneten 8 der äußeren Lage 11 nach radial außen hin zunimmt. Die Magnete 8 der äußeren Lage 11 sind dadurch V-förmig angeordnet. Die bezüglich der Polmittelachse 6 äußeren Magnete 8.1 der inneren Lage 10 und die Magnete 8 der äußeren Lage 11 sind jeweils mit einem Neigungswinkel ∞₁ zur Polmittelachse 6 angeordnet, der zwischen der Polmittelachse 6 und einer Neigungsachse 12 des jeweiligen Magneten 8 eingeschlossen ist. Die Magnete 8 sind beispielsweise quaderförmig mit einem rechteckförmigen Querschnitt ausgebildet, wobei der rechteckförmige Querschnitt zwei breite Seiten und zwei schmale Seiten hat. Die Magnete 8 haben eine Höhe H, die zwischen den zwei breiten Seiten zu messen ist.

Erfindungsgemäß ist vorgesehen, dass die Magnete 8 der radial äußeren Lage 11 derart angeordnet sind, dass ein Schnittpunkt S1 der Neigungsachse 12 der Magnete 8 der radial äußeren Lage 11 mit der Polmittelachse 6 radial innerhalb der radial inneren Lage 10 liegt und dass der Neigungswinkel ∞₁ der Magnete 8 der radial äußeren Lage 11 kleiner ausgebildet ist als der Neigungswinkel ∞₂ der äußeren Magnete 8.1 der radial inneren Lage 10. Auf diese Weise sind die Magnete 8 der äußeren Lage 11 bezüglich der Polmittelachse 6 beispielsweise derart weit nach außen verschoben, dass diese mit einer schmalen Seite jeweils einer schmalen Seite oder einem Randbereich einer breiten Seite eines inneren Magneten 8.2 der inneren Lage 10 zugewandt sind.

Durch die erfindungsgemäße Ausführung des Rotors 1 kann eine mit dem erfindungsgemäßen Rotor 1 ausgestattete elektrische Maschine 2 ein hohes Drehmoment erzeugen. Außerdem wird die Drehmomentenwelligkeit verringert und eine gute Feldschwächbarkeit erreicht.

Nach dem ersten Ausführungsbeispiel nach Fig.1 ist zwischen den äußeren Magneten 8.1 der inneren Lage 10, bezogen auf einen Querschnitt des Rotors 1 in einer Ebene einer der Blechlamellen, ein einziger innerer Magnet 8.2 vorgesehen, der beispielsweise symmetrisch zur Polmittelachse 6 angeordnet ist. Die Höhe H des inneren Magneten 8.2 ist beispielsweise größer als die Höhe H der übrigen Magnete 8,8.1 der jeweiligen Magnetanordnung 7. Der innere Magnet 8.2 ist gegenüber den übrigen Magneten 8,8.1 der jeweiligen Magnetanordnung 7 aus einem Material mit geringerer magnetischer Koerzitivfeldstärke und/oder mit höherer magnetischer Remanenz hergestellt. Die bezüglich der Polmittelachse 6 äußeren Magnete 8.1 der inneren Lage 10 und die Magnete 8 der äußeren Lage 11 sind bezüglich der Abmessungen beispielsweise identisch ausgebildet und beispielsweise symmetrisch zur Polmittelachse 6 angeordnet.

Die Magnete 8.1,8.2 der inneren Lage 10 sind beispielsweise in separaten Taschen 15 des Rotorkörpers 4 angeordnet. Ebenso sind die Magnete 8 der äußeren Lage 11 beispielsweise in separaten Taschen 15 des Rotorkörpers 4 vorgesehen.

Radial außerhalb der äußeren Lage 11 des jeweiligen Rotorpols 5 können beispielsweise zwei schlitzförmige Aussparungen 16 als Flussbarriere angeordnet sein, die einen derartigen Neigungswinkel β zur Polmittelachse 6 aufweisen, dass der Abstand zwischen den Aussparungen 16 nach radial innen hin zunimmt. Auf diese Weise sind die Aussparungen 16 V-förmig zueinander vorgesehen, wobei die V-Form sich nach radial innen hin öffnet. Außerdem sind die Aussparungen 16 beispielsweise symmetrisch zur Polmittelachse 6 angeordnet.

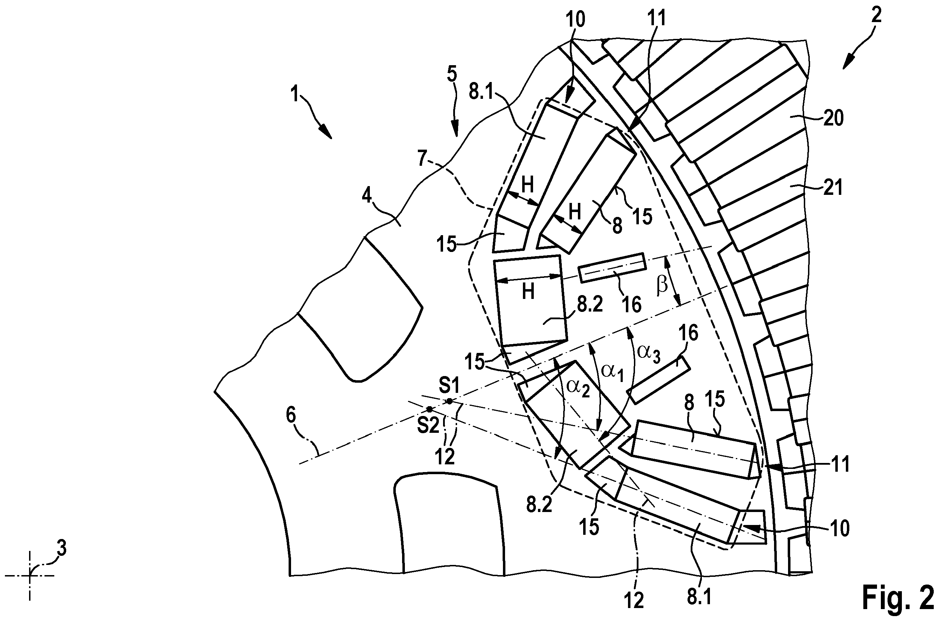

Fig.2 zeigt eine Ansicht eines erfindungsgemäßen Rotorpols eines Rotors nach einem zweiten Ausführungsbeispiel. Bei dem Rotor nach Fig.2 sind die gegenüber dem Rotor nach Fig.1 gleichbleibenden oder gleichwirkenden Teile durch die gleichen Bezugszeichen gekennzeichnet.

Das zweite Ausführungsbeispiel unterscheidet sich gegenüber dem ersten Ausführungsbeispiel lediglich darin, dass zwischen den äußeren Magneten 8.1 der inneren Lage 10 zwei innere Magnete 8.2 anstatt einem einzigen inneren Magneten 8.2 vorgesehen sind. Die inneren Magnete 8.2 sind beispielsweise symmetrisch zur Polmittelachse 6 angeordnet.

Die inneren Magnete 8.2 der inneren Lage 10 können nach dem zweiten Ausführungsbeispiel einen Neigungswinkel ∞₃ zur Polmittelachse 6 aufweisen, der kleiner als 90 Grad ist. Außerdem ist die Höhe H der inneren Magnete 8.2 beispielsweise größer als die Höhe H der übrigen Magnete 8,8.1 der jeweiligen Magnetanordnung 7.

Der erfindungsgemäße Rotor 1 kann in einer elektrischen Maschine 2 eingesetzt werden, die einen Stator 20 mit einer elektrischen Statorwicklung 21 aufweist. Der Stator 20 umschließt dabei den Rotor 1 ringförmig. Der Rotor 1 ist dabei mit seinem Außenumfang einem Innenumfang des Stators 20 zugewandt.

## Patentansprüche

1. Rotor (1) einer elektrischen Maschine (2), umfassend einen um eine Rotorachse (3) rotierbaren Rotorkörper (4), der bezogen auf einen Querschnitt mehrere Rotorpole (5) mit jeweils einer Polmittelachse (6) aufweist, wobei mehrere, insbesondere alle, der Rotorpole (5) eine zweilagige Magnetanordnung (7) umfassend mehrere Magnete (8), insbesondere Permanentmagnete, aufweisen, wobei die Magnetanordnung (7) in radialer Richtung bezüglich der Rotorachse (3) gesehen jeweils eine innere Lage (10) von mindestens drei Magneten (8) und eine äußere Lage (11) von zwei Magneten (8) umfasst, wobei die innere Lage (10) einen nach radial außen geöffneten Bogen bildet, wobei die äußere Lage (11) derart ausgebildet ist, dass der Abstand zwischen den Magneten (8) der äußeren Lage (11) nach radial außen hin zunimmt, wobei die bezüglich der Polmittelachse (6) äußeren Magnete (8.1) der inneren Lage (10) und die Magnete (8) der äußeren Lage (11) jeweils einen Neigungswinkel (∞₂, ∞₁) zur Polmittelachse (6) aufweisen, der zwischen der Polmittelachse (6) und einer Neigungsachse (12) des jeweiligen Magneten (8) eingeschlossen ist,
**dadurch gekennzeichnet, dass**
- die Magnete (8) der radial äußeren Lage (11) derart angeordnet sind, dass ein Schnittpunkt (S1) der Neigungsachse (12) der Magnete (8) der radial äußeren Lage (11) mit der Polmittelachse (6) radial innerhalb der radial inneren Lage (10) liegt, und dass
- der Neigungswinkel (∞₁) der Magnete (8) der radial äußeren Lage (11) kleiner ausgebildet ist als der Neigungswinkel (∞₂) der äußeren Magnete (8.1) der radial inneren Lage (10).

2. Rotor nach Anspruch 1, **dadurch gekennzeichnet, dass** zwischen den äußeren Magneten (8.1) der inneren Lage (10) ein innerer Magnet (8.2) vorgesehen ist, der insbesondere symmetrisch zur Polmittelachse (6) angeordnet ist.

3. Rotor nach Anspruch 1, **dadurch gekennzeichnet, dass** zwischen den äußeren Magneten (8.1) der inneren Lage (10) zwei innere Magnete (8.2) vorgesehen sind, die insbesondere symmetrisch zur Polmittelachse (6) angeordnet sind.

4. Rotor nach Anspruch 3, **dadurch gekennzeichnet, dass** die inneren Magnete (8.2) der inneren Lage (10) einen Neigungswinkel (∞₃) zur Polmittelachse aufweisen, der kleiner als 90 Grad ist.

5. Rotor nach einem der Ansprüche 2 bis 4, **dadurch gekennzeichnet, dass** die Höhe (H) des inneren Magneten (8.2) oder der inneren Magnete (8.2) größer ist als die Höhe (H) der übrigen Magnete (8,8.1) der jeweiligen Magnetanordnung (7).

6. Rotor nach einem der Ansprüche 2 bis 5, **dadurch gekennzeichnet, dass** der innere Magnet (8.2) bzw. die inneren Magnete (8.2) gegenüber den übrigen Magneten (8,8.1) der jeweiligen Magnetanordnung (7) aus einem Material mit geringerer magnetischer Koerzitivfeldstärke und/oder mit höherer magnetischer Remanenz hergestellt ist.

7. Rotor nach einem der vorhergehenden Ansprüche, **dadurch gekennzeichnet, dass** die bezüglich der Polmittelachse (6) äußeren Magnete (8.1) der inneren Lage (10) und die Magnete (8) der äußeren Lage (11) bezüglich der Abmessungen und/oder des Materials identisch ausgebildet sind.

8. Rotor nach einem der vorhergehenden Ansprüche, **dadurch gekennzeichnet, dass** die bezüglich der Polmittelachse (6) äußeren Magnete (8.1) der inneren Lage (10) und die Magnete (8) der äußeren Lage (11) symmetrisch zur Polmittelachse (6) angeordnet sind.

9. Rotor nach einem der vorhergehenden Ansprüche, **dadurch gekennzeichnet, dass** die Magnete (8.1,8.2) der inneren Lage (10) in separaten Taschen (15) des Rotorkörpers (4) und/oder dass die Magnete (8) der äußeren Lage (11) in separaten Taschen (15) des Rotorkörpers (4) vorgesehen sind.

10. Rotor nach einem der vorhergehenden Ansprüche, **dadurch gekennzeichnet, dass** radial außerhalb der äußeren Lage (11) zwei schlitzförmige Aussparungen (16) als Flussbarriere angeordnet sind, die einen derartigen Neigungswinkel (β) zur Polmittelachse (6) aufweisen, dass der Abstand zwischen den Aussparungen (16) nach radial innen hin zunimmt, und die insbesondere symmetrisch zur Polmittelachse (6) liegen.

11. Elektrische Maschine mit einem Stator (20) umfassend eine Statorwicklung (21) und mit einem Rotor (1) nach einem der vorhergehenden Ansprüche.

## Claims

1. Rotor (1) of an electric machine (2), comprising a rotor body (4) which is rotatable about a rotor axis (3) and which, in terms of a cross section, has a plurality of rotor poles (5) having in each case one pole central axis (6), wherein a plurality of, in particular all, the rotor poles (5) have a two-layered magnet assembly (7) comprising a plurality of magnets (8), in particular permanent magnets, wherein the magnet assembly (7), when viewed in the radial direction in terms of the rotor axis (3), has in each case an inner layer (10) of at least three magnets (8) and an outer layer (11) of two magnets (8), wherein the inner layer (10) forms an arc which is open radially towards the outside, wherein the outer layer (11) is designed in such a manner that the spacing between the magnets (8) of the outer layer (11) increases radially towards the outside, wherein in terms of the pole central axis (6) the outer magnets (8.1) of the inner layer (10) and the magnets (8) of the outer layer (11) have in each case an inclination angle (∞₂, ∞₁) in relation to the pole central axis (6), which is enclosed between the pole central axis (6) and an inclination axis (12) of the respective magnet (8),
**characterized in that**
- the magnets (8) of the radially outer layer (11) are disposed in such a manner that an intersection point (S1) of the inclination axis (12) of the magnets (8) of the radially outer layer (11) and the pole central axis (6) lies radially within the radially inner layer (10), and **in that**
- the inclination angle (∞₁) of the magnets (8) of the radially outer layer (11) is designed to be smaller than the inclination angle (∞₂) of the outer magnets (8.1) of the radially inner layer (10).

2. Rotor according to Claim 1, **characterized in that** an inner magnet (8.2), which is in particular disposed symmetrically in relation to the pole central axis (6), is provided between the outer magnets (8.1) of the of the inner layer (10).

3. Rotor according to Claim 1, **characterized in that** two inner magnets (8.2), which are in particular disposed symmetrically in relation to the pole central axis (6), are provided between the outer magnets (8.1) of the inner layer (10).

4. Rotor according to Claim 3, **characterized in that** the inner magnets (8.2) of the inner layer (10) have an inclination angle (∞₃), which is smaller than 90 degrees, in relation to the pole central axis.

5. Rotor according to one of Claims 2 to 4, **characterized in that** the height (H) of the inner magnet (8.2), or of the inner magnets (8.2), is larger than the height (H) of the remaining magnets (8, 8.1) of the respective magnet assembly (7).

6. Rotor according to one of Claims 2 to 5, **characterized in that** the inner magnet (8.2), or the inner magnets (8.2), is/are produced from a material with a lesser coercive magnetic field strength and/or a higher magnetic remanence in comparison to the remaining magnets (8, 8.1) of the respective magnet assembly (7).

7. Rotor according to one of the preceding claims, **characterized in that** in terms of the pole central axis (6) the outer magnets (8.1) of the inner layer (10) and the magnets (8) of the outer layer (11) are designed identically in terms of the dimensions and/or of the material.

8. Rotor according to one of the preceding claims, **characterized in that** in terms of the pole central axis (6) the outer magnets (8.1) of the inner layer (10) and the magnets (8) of the outer layer (11) are disposed symmetrically in relation to the pole central axis (6).

9. Rotor according to one of the preceding claims, **characterized in that** the magnets (8.1, 8.2) of the inner layer (10) are provided in separate pockets (15) of the rotor body (4), and/or **in that** the magnets (8) of the outer layer (11) are provided in separate pockets (15) of the rotor body (4).

10. Rotor according to one of the preceding claims, **characterized in that** disposed radially outside the outer layer (11) are two slot-shaped clearances (16) provided as a flux barrier, which have an inclination angle (β) in relation to the pole central axis (6) in such a manner that the spacing between the clearances (16) increases radially towards the inside, and which lie in particular so as to be symmetrical in relation to the pole central axis (6).

11. Electric machine having a stator (20) comprising a stator winding (21) and having a rotor (1) according to one of the preceding claims.

## Revendications

1. Rotor (1) d'une machine électrique (2), comprenant un corps de rotor (4) pouvant tourner autour d'un axe de rotor (3) et qui, par rapport à une section transversale, présente plusieurs pôles de rotor (5) ayant respectivement un axe central de pôle (6), dans lequel plusieurs, en particulier tous les pôles de rotor (5) présentent un ensemble d'aimants (7) à deux couches comprenant plusieurs aimants (8), en particulier des aimants permanents, dans lequel l'ensemble d'aimants (7), vu dans la direction radiale par rapport à l'axe de rotor (3), comprend respectivement une couche intérieure (10) d'au moins trois aimants (8) et une couche extérieure (11) de deux aimants (8), dans lequel la couche intérieure (10) forme un arc ouvert radialement vers l'extérieur, dans lequel la couche extérieure (11) est réalisée de telle sorte que la distance entre les aimants (8) et la couche extérieure (11) augmente radialement vers l'extérieur, dans lequel les aimants (8.1), extérieurs par rapport à l'axe central de pôle (6), de la couche intérieure (10) et les aimants (8) de la couche extérieure (11) présentent respectivement un angle d'inclinaison (∞₂, ∞₁) par rapport à l'axe central de pôle (6) qui est compris entre l'axe central de pôle (6) et un axe d'inclinaison (12) de l'aimant (8) respectif,
**caractérisé en ce que**
- les aimants (8) de la couche radialement extérieure (11) sont disposés de telle sorte qu'un point d'intersection (S1) de l'axe d'inclinaison (12) des aimants (8) de la couche radialement extérieure (11) avec l'axe central de pôle (6) est situé radialement à l'intérieur de la couche intérieure radiale (10), et **en ce que**
- l'angle d'inclinaison (∞₁) des aimants (8) de la couche radialement extérieure (11) est plus petit que l'angle d'inclinaison (∞₂) des aimants extérieurs (8.1) de la couche radialement intérieure (10).

2. Rotor selon la revendication 1, **caractérisé en ce qu'**entre les aimants extérieurs (8.1) de la couche intérieure (10), un aimant intérieur (8.2) est prévu qui est disposé en particulier de manière symétrique par rapport à l'axe central de pôle (6).

3. Rotor selon la revendication 1, **caractérisé en ce qu'**entre les aimants extérieurs (8.1) de la couche intérieure (10), deux aimants intérieurs (8.2) sont prévus qui sont disposés en particulier de manière symétrique par rapport à l'axe central de pôle (6).

4. Rotor selon la revendication 3, **caractérisé en ce que** les aimants intérieurs (8.2) de la couche intérieure (10) présentent un angle d'inclinaison (∞₃) par rapport à l'axe central de pôle qui est inférieur à 90 degrés.

5. Rotor selon l'une quelconque des revendications 2 à 4, **caractérisé en ce que** la hauteur (H) de l'aimant intérieur (8.2) ou des aimants intérieurs (8.2) est supérieure à la hauteur (H) des autres aimants (8.8.1) de l'ensemble d'aimants (7) respectif.

6. Rotor selon l'une quelconque des revendications 2 à 5, **caractérisé en ce que** par rapport aux autres aimants (8.8.1) de l'ensemble d'aimants (7) respectif, l'aimant intérieur (8.2) ou les aimants intérieurs (8.2) sont fabriqués à partir d'un matériau à intensité de champ coercitif inférieure et/ou à rémanence magnétique supérieure.

7. Rotor selon l'une quelconque des revendications précédentes, **caractérisé en ce que** les aimants (8.1), extérieurs par rapport à l'axe central de pôle (6), de la couche intérieure (10) et les aimants (8) de la couche extérieure (11) sont réalisés de manière identique en ce qui concerne les dimensions et/ou le matériau.

8. Rotor selon l'une quelconque des revendications précédentes, **caractérisé en ce que** les aimants (8.1), extérieurs par rapport à l'axe central de pôle (6), de la couche intérieure (10) et les aimants (8) de la couche extérieure (11) sont disposés de manière symétrique par rapport à l'axe central de pôle (6).

9. Rotor selon l'une quelconque des revendications précédentes, **caractérisé en ce que** les aimants (8.1, 8.2) de la couche intérieure (10) sont prévus dans des poches séparées (15) du corps de rotor (4), et/ou **en ce que** les aimants (8) de la couche extérieure (11) sont prévus dans des poches séparées (15) du corps de rotor (4).

10. Rotor selon l'une quelconque des revendications précédentes, **caractérisé en ce que** radialement à l'extérieur de la couche extérieure (11), deux évidements en forme de fente (16) sont prévus en tant que barrière d'écoulement et présentent un angle d'inclinaison (β) par rapport à l'axe central de pôle (6) tel que la distance entre les évidements (16) augmente radialement vers l'intérieur, et qui sont situés par rapport à l'axe central de pôle (6) en particulier de manière symétrique.

11. Machine électrique à stator (20), comprenant un enroulement de stator (21) et un rotor (1) selon l'une quelconque des revendications précédentes.
